# EUROPEAN PATENT APPLICATION

(11) **EP 4 332 802 A1**
(43) Date of publication of application: **06.03.2024**
(21) Application number: 22193308.8
(22) Date of filing: 31.08.2022
(51) Int. Cl.: G06F 21/55, G06F 21/77, H04L 9/40

(54) **PKI SMART-CARD THREAT DETECTION AND ENDPOINT USE VISIBILITY**

(71) Applicant: THALES DIS CPL USA, INC., Austin, TX 78759 (US)
(72) Inventor: JOSHI, Pankaj, 121002 Faridabad (IN)
(74) Representative: Grevin, Emmanuel

(57) **Abstract**

Provided is a Middleware (14) comprising an Event Generator (22) to generate events (50) related to access and usage of the authenticator device (5) by one or more apps executing on an end-point; an Event Viewer (23) that makes visible events related to certificate based PKI authenticator device interactions by the one or more apps; and an Event Uploader (24) to upload the events. An Analytics Engine (48) on a server side identifies an application useage status of the authenticator device (5) in view of event and application correlations, builds analytics on usage patterns from the application useage status on PKI authenticator device interactions by the one or more apps, and reports anamolies and potential atttacks on the authenticator device in view of the analytics based on an event threat analysis.

## Description

### TECHNICAL FIELD

The present invention relates generally to smart card security, and more specifically, to detection of PKI based smart card attacks in an organization leveraging PKI based Multi-Factor Authentication (MFA) and Identify Access & Management (IAM) policies.

### BACKGROUND

A smart card is a physical card that has an embedded integrated chip that acts as a security token. Smart cards are designed to be tamper-resistant and use encryption to provide protection for in-memory information. Cards with microcontroller chips can perform on-card processing functions and manipulate information in the chip's memory. Smart cards are also used as cryptographic tokens for a number of authentication purposes, including physical access to buildings, rooms, computer and network access, and some secure remote access solutions, such as virtual private networks (VPN), and portals. Using smart cards for authentication dramatically increases security.

Smart cards that require personal identification numbers (PINs) provide two-factor authentication, where the user who attempts to log on must possess the smart card and know its PIN. Multi-factor Authentication (MFA) is an authentication method that requires the user to provide two or more verification factors to gain access to a resource. With MFA, a user is granted access only after successfully presenting several separate pieces of evidence to an authentication mechanism - usually from at least two of the following three categories: knowledge--something one knows such as a password or personal identification number (PIN), possession--something one has such as a cryptographic identification device, smart card or secure token, and inherence--biometrics such as fingerprints, iris, face, palm print, etc. The goal of MFA is to create a layered defense and make it more difficult for an unauthorized person to access a target such as a physical location, computing device, network or database.

PKI certificate-based smart cards with MFA offer a single solution for strong authentication and applications access control, including remote access, network access, password management, network logon, as well as corporate ID badges, magnetic stripes and proximity. This is because smart card technology contains a cryptographic module. This module facilitates the generation and security of public key infrastructure (PKI) keys and certificates that are used to authenticate operating systems and applications, sign documents, or encrypt data, such as files or emails. This cryptographic module contains the critical public/private keys, which allows a user access on the critical data and infrastructure, which can be of very high value to attackers.

In general, the initial step of a data breach in an attack is to compromise user access. Organizations that manage the user access usually only rely on user name and password, which are comparatively easy to compromise due to many known attack methods. On the other hand, an organization using MFA smart card based authentication provides the highest-level security. This type of organization requires middleware, which provides for application and smart card interaction, which makes the PKI based authentication possible on any endpoint. Though it is difficult to bypass the MFA, there are many potential ways to abuse the MFA while using a Smart Card. For example, if there is an unknown key logger application able to compromise the PIN of any end user, the malicious application can make use of the smart card authentication while the user's smart card is still connected on a specific endpoint. There is also the possibility of tailgating an application along with an authenticated application. In these cases, the server side validation will never know if the request is genuinely coming from the real user or not. With the smart card still connected, the attacker may then be able to access the security module and compromise the endpoint without the organization ever knowing.

One problem is that organizations, typically their Information Technology (IT) and security departments, do not necessarily know which applications are accessing the Smart Card. And, it is difficult, if not almost impossible to know, which application on an endpoint in an organization is loading middleware to interact with a user's smart card. This is because a Smart Card implementation is an open standard with no valid access control checks in place. This means any application can any time load the installed middleware to interact with the smart card, with the only check stop to prevent malicious activity being the smart card PIN.

A need therefore exists for providing visibility on endpoints using Smart Card-based PKI authentication using Middleware.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In one embodiment, a Middleware (14) is provided on a local side connecting one or more Applications (15) to an authenticator device (5) by way of an Operating system (OS)(13) there in between. The Middleware (14) comprises an Event Generator (22) to generate events (50) related to access and usage of the authenticator device (5) by one or more apps executing on an end-point; an Event Viewer (23) that makes visible events related to certificate based PKI authenticator device interactions by the one or more apps; and an Event Uploader (24) to upload the events. The Event Viewer (23) receives an event report (400) from an Analytics Engine (48) on a server-side that correlates the events with the one or more apps and keep records of the correlations in a Database (40) by way of an an App Inventory Manager (44). The Analytics Engine (48) identifies an application useage status of the authenticator device (5) in view of the correlations, builds analytics on usage patterns from the application useage status on PKI authenticator device interactions by the one or more apps, and identifies anamolies and potential atttacks on the authenticator device in view of the analytics and produces an event threat analysis. The Event Viewer (23) presents information from the report (400) to a local user on the local side regarding application level activities associated with the authenticator device.

In another embodiment, a system (100) is provided to detect targeted Public Key Infrastructure (PKI) threats and attacks on an end-point (10) communicatively coupled to an authenticator device (5) providing PKI based Multi-Factor Authentication (MFA). The system comprises, on a local side, a Middleware (14) connecting one or more Applications (15) to the authenticator device (5) by way of an Operating system (OS)(13) there in between, and, on a server side, communicatively coupled to the local side an Event Receiver (31) to receive the events (50) presented by the Event Uploader, an Event Parser (32) to parse and categorize the events, from the Event Receiver, specific to each of the one or more apps executing on the end-point, an App Inventory Manager (44) coupled to the Event Parser to correlate the events with the one or more apps and keep records of the correlations in a Database (40), and an Analytics Engine (48) that identifies an application useage status of the authenticator device (5) in view of the correlations, builds analytics on usage patterns from the application useage status on PKI authenticator device interactions by the one or more apps, identifies anamolies and potential atttacks on the authenticator device in view of the analytics and produces an event threat analysis, and an Event Viewer (33) that reports the event threat analysis, and makes visible to system administrators certain events related to user and attacker interactions with the authenticator device.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** depicts a system to detect targeted Public Key Infrastructure (PKI) threats and attacks on an end-point communicatively coupled to an authenticator device in accordance with one embodiment;
**FIG. 1B** is a workflow diagram illustrating how system components interact together to generate events, and wherein the authenticator device provides PKI based Multi-Factor Authentication (MFA) in accordance with one embodiment;
**FIG 2A** illustrates an Event Generator to generate events related to access and usage of the authenticator device by the one or more apps executing on the end-point in accordance with an embodiment;
**FIG 2B** illustrates exemplary event generation information components in accordance with an embodiment;
**FIG. 3A** illustrates a work-flow diagram for event generation on the end-point at a local side coupled with event reception and analysis on a server side in accordance with one embodiment;
**FIG. 3B** illustrates an event generation example related to PKI based Multi-Factor Authentication (MFA) on an authenticator device in accordance with one embodiment;
**FIG. 4** illustrates an exemplary event report of targeted threats and attacks on an endpoint communicatively coupled to an authenticator device providing PKI based Multi-Factor Authentication (MFA) in accordance with one embodiment;
**FIG. 5** depicts an alert mechanism based on event threat analysis that makes visible to system administrators events related to user and attacker interactions with the authenticator device in accordance with one embodiment; and
**FIG. 6** depicts an exemplary diagrammatic representation of a machine and hardware platform to perform the methods herein in accordance with an embodiment.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

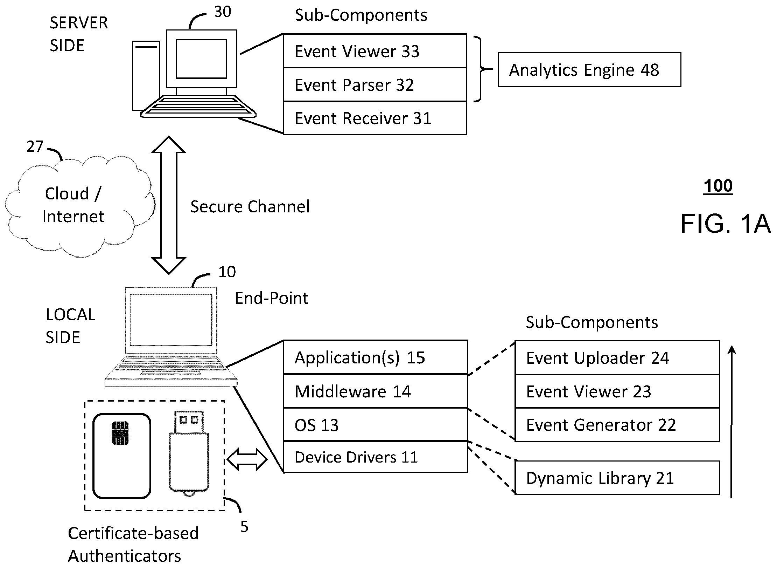

**FIG. 1A** depicts a system **100,** in accordance with one embodiment, to detect targeted Public Key Infrastructure (PKI) threats and attacks on an end-point **10** communicatively coupled to an authenticator device **5,** for instance, providing PKI based Multi-Factor Authentication (MFA). The certificate based authenticator device **5** can be one of a Smart Card, an eToken, or USB key device based on PKI authentication. The end-point **10** can be one of a mobile device, a smart card reader, a computer or other PKI certificate based authenticator host device.

The system **100** comprises components on a local side and a server side communicatively coupled thereto over a secure channel **27** in the cloud or over the internet. On the local side, it includes a Middleware **14** connecting one or more applications **15** to the authenticator device **5** by way of an Operating System (OS) **13** there in between. The Middleware **14** includes an Event Generator **22,** an Event Viewer **33** and Event Uploader **24.** The Event Generator **22** generates events **50** related to access and usage of the authenticator device **5** by the one or more apps **15** executing on the end-point **10.** The Event Viewer **23** makes visible events related to certificate based PKI authenticator device **5** interactions by the one or more apps **15.** The Event Uploader **24** uploads the events. On the server side the server **30** comprises an Event Receiver **31,** Event Parser **32** and Event Viewer **33.** The Event Receiver **31** receives the events **50** presented by the Event Uploader **24.** The Event Parser **32** parses and categorizes the events, from the Event Receiver, specific to each of the one or more apps **15** executing on the end-point.

The Analytics Engine **48** is communicatively coupled to the Event Parser **32** and Event Viewer **33.** It provides for reporting and visualization of endpoint activities with the authenticator device **5** on both the server side and the local side. It builds analytics on good and bad usage patterns from the application usage status on PKI authenticator device interactions by the one or more apps; identifies anomalies and potential attacks on the authenticator device in view of the analytics and produces an event threat analysis. The system **100** monitors endpoint activities related to the smart card public/private keys/objects, and along with the Analytics Engine **48** helps detect unwanted usage of the smart card and behavior pattern of the users.

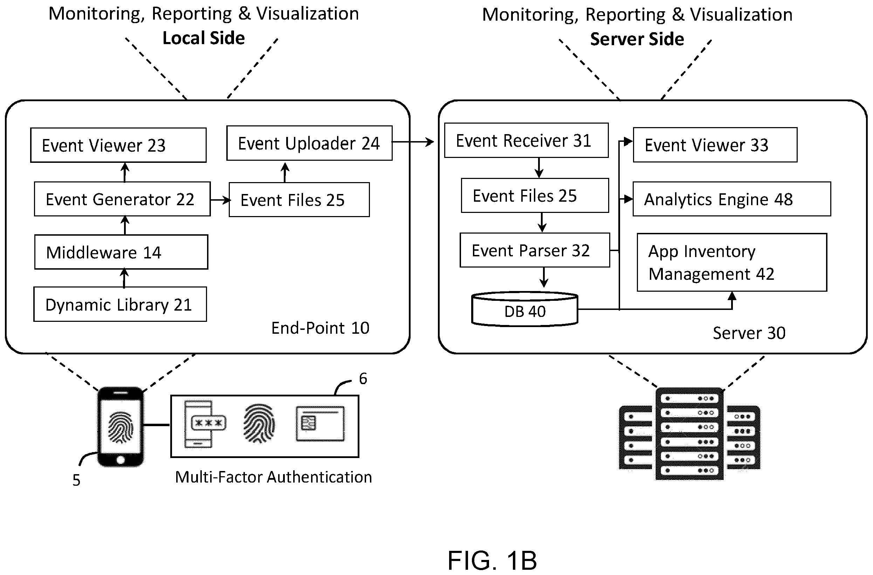

**FIG. 1B** provides for a workflow illustration of how the components of system **100** interact together to generate events, which are reported and visualized on both the local side and the server side. Briefly, the same components on the local side of **FIG 1A** are reproduced, but now showing further the event files **25.** The event files **25** are discussed ahead in detail. Similarly, the same components on the server side of **FIG 1A** are reproduced, but now showing further the database **40** and app inventory management **42.**

It also shows an embodiment where the authenticator device **5** on the end-point **10** supports PKI based Multi-Factor Authentication (MFA). MFA factors **6** are pieces of information and a process used to authenticate a person's identity for security purposes. Two-factor authentication is an authentication mechanism based on two pieces of information: something one has, such as a smart card, token ID, etc. and something one knows, such as a PIN. When presented with a log-on option, the user must provide both pieces of the authentication factor or they are denied access to the system. Cloud applications offered by the organization hosting the end-points **10** may employ multi-factor authentication (MFA) factors 6 as a security measure whereby a user is granted access to a website or application only after successfully presenting certain pieces of evidence to an authentication mechanism. It is a layered approach to securing data and applications where the end-point 10 requires the user to present a combination of two or more credentials to verify a user's identity for login. Credentials may include a password (or PIN), a biometric factor (e.g. fingerprint, thumbprint, iris scan), and/or a hardware security device (e.g. Fast IDentity Online USB device).

With respect to PKI threat detection at the server side, the monitoring, analytics and visualization aspects identify unwanted/unknown application interacting with smart card directly on a specific endpoint, assesses use behavior analysis and detects anomalies in usage, PIN attempts and patterns, authentication without the PIN (e.g., SSO/tailgate), key logger activities while the user is entering the PIN on a popup, unknown application launching the user application seeking PKI operation, and any other MFA related activities with the authenticator device **5.** On the server side, Analytics Engine **48** is coupled to the App Inventory Manager **42,** which correlates events with the one or more apps **15.** By way of the database **40,** it keep records of the correlations with respect to which apps generate events. The Analytics Engine **48** identifies application **15** usage status of the authenticator device **5** in view of the correlations. It identifies potential attacks, for example, based on timing, location, user(s), type of access, and MFA **6** interactions with the authenticator device **5.** The Event Viewer **33** can report the event threat analysis provided by the Analytics Engine **48,** and make visible to system administrators certain events related to user and attacker interactions with the authenticator device.

With respect to PKI threat detection on the local endpoint, it informs users when their card keys are being used by any application, how the applications are using the authenticator device, and which application(s) is/are using the private keys or interacting with smart card in a malicious way, so in case of misuse, user can disconnect the card or take any action locally. It correlates events and informs the user of which application tried to use smart card, successful and failed attempt of the card by specific binary, any unknown workflow of smart card is being triggered, if the card is in Login State/SSO/SingleSignon, card usage during SingleSignOn, and Success/failed PIN Attempts.

On the server side, the Analytics Engine **48** can investigate first detection of a binary (associated with invocation of the application **15** of interest) accessing the authenticator device **5** and MFA **6** activities. It can evaluate the binary information, its reputation, and availability of the binary deployed in the corporate organization. It assesses and categorizes the binary doing smart card specific operations, for example, 1) known binaries and trusted operations, 2) known binaries and unknown operations, and 3) unknown binaries and card operations. In the first category, known Binaries are those doing specific smart card operations. In the second category, a reputable (allowed) application is trying to use smart card, but is not intended since an unknown operation with the card is detected. In this case further investigation of the purpose is done. In the third category, unknown/bad binaries are doing specific smart card operations. Here, where a one or more system are seen with these suspicious behaviors, a few actions are considered: Listing of successful or failure attempts at org level, Investigation of successful attempts/damage, blocking the binary use in the corporate network, and issuing PIN change requests for the affected card users, among other contemplated actions.

On this point, and referring briefly back to **FIG. 1A****,** in one embodiment, a dynamic library **21** is loaded by the one or more apps **15** and configured to communicate with the authenticator device **5** for certificate based PKI authenticator device interaction. The dynamic library **21** reports an origin of a binary of the calling application **15** loading the dynamic library **21,** and signature information of the binary. Dynamic Link Libraries (DLL) files, such as dynamic library **21,** are binary files that can contain executable code and resources such as images, icons, files, etc. Unlike applications, DLLs cannot be directly executed. Rather, the application will load the DLL when it are required, or will load it at launch time, during startup. A DLL contains functions, classes, variables, Uls and resources that an .exe, or other DLL uses. There are 2 types of DLLs; namely, static libraries and dynamic libraries. In Windows, the file extensions for the DLL are: (.lib) for static libraries and (.dll) for dynamic libraries. The main difference is that static libraries are linked to the executable at compile time; whereas dynamic linked libraries are not linked until run-time. A DLL is loaded at runtime when an executable (.exe) explicitly loads the DLL. For example, an application **15,** or program, loads the DLL at startup in Windows via the Win32 API LoadLibrary, or when it is a dependency of another DLL. The application **15,** or program uses the Get Process Address to load a function or a resource. A DLL is distinct from a device driver.

In contrast, a device driver is a piece of software that tells the Operating System (OS) and other software how to communicate with a piece of hardware. The driver is a collection of one or more routines that serve the specific purpose of providing an interface to particular hardware. Here, the device driver **11** is one available communication mechanism between the application **15** and the authentication device **5.** The OS loads the device driver, and applications **15,** or programs, that want to access the device driver call OS utilities/functions to access and communicate with the authentication device. An application **15** using device drivers managed by the OS, includes OS function calls from within the application **15** to access the device driver for communicating with the authentication device **5.** In contrast, the DLL previously discussed may be loaded by the application directly, not the OS. For example, the application **15** may instead load the DLL to communicate with the authentication device **5;** and in this case, it does not call the OS to communicate with it. Both approaches are contemplated in the embodiments herein described below.

In one embodiment, the Middleware **14** is configured to retrieve information from the Operating System (OS) **13** regarding a calling application (e.g. the one or more apps **15** that loads the device driver **11** by way of the OS to communicate with the authenticator device 5 for certificate based PKI authenticator device interactions. The information identifies an origin of a binary of the calling application **15** invoking the device driver **11** by way of the OS, OS process tree information related to invocation of the binary and the the device driver **11,** and signature information of the binary.

In another embodiment, the Middleware **14** further comprises an Operating System (OS) extension to a device driver **11** configured to retrieve information from a calling application **15** of the one or more apps that loads the device driver **11** to communicate with the authenticator device for certificate based PKI authenticator device interactions. In this case, the information identifies an origin of a binary of the calling application **15** invoking the device driver **11,** OS process tree information related to invocation of the binary and the calling application, and signature information of the binary.

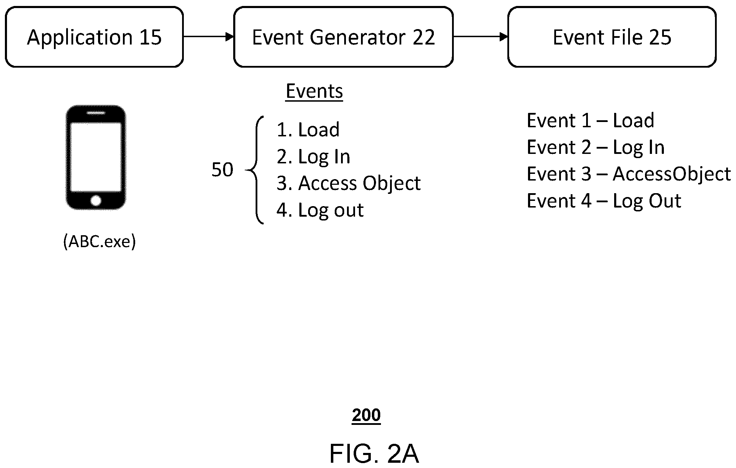

**FIG 2A** illustrates an Event Generator **22** to generate events **50** related to access and usage of the authenticator device **5** by the one or more apps **15** executing on the endpoint. The events **50** for a particular application, or app use scenario, are collected and contained in an event file **25.** Recall, the Event Viewer **23** makes visible events **50** related to certificate based PKI authenticator device interactions with the one or more apps **15.** The Middleware **14** is aware of the caller application, and so it can report what applications are invoking or using the device drivers **11** and/or dynamic link libraries **21.** The Middleware **14** generates verbose events **50** on authenticator device **5** interactions using Public Key Cryptography Standards (PKCS) #11, Cryptographic Service Provider (CSP), Key Storage Provider (KSP) or Minidriver interfaces. It includes a separate component to investigate the caller application, like signing information, origin of the binary, binary invoked by user or other process, traverse to the origin of the trigger of that application calling the DLL **21.** The interactions may correspond to Application Programming Interface (API) activities with the authenticator device **5,** including function calls, method calls, and data inquiry using the API for PKCS#11, CSP, KSP or Minidriver.

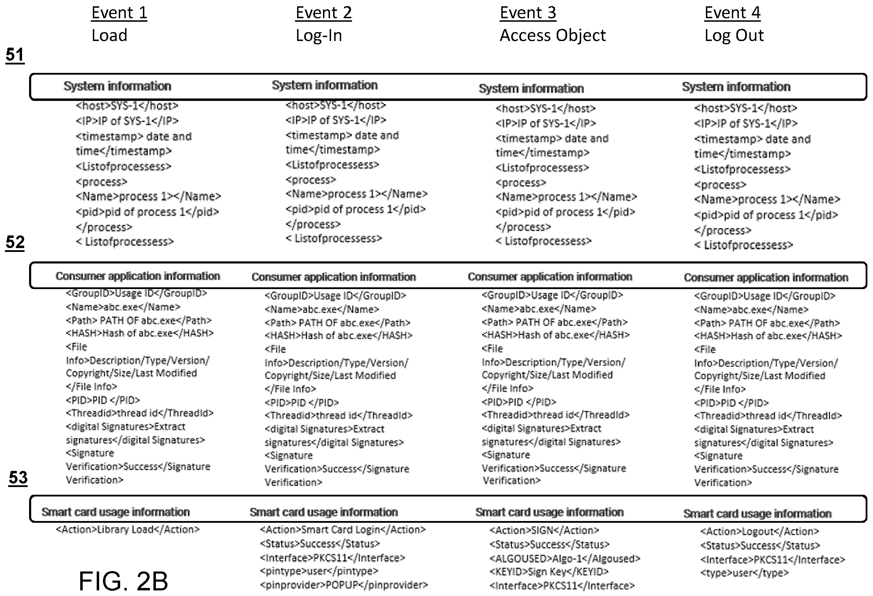

The event generator **50** includes a first part 1 for caller analytics to evaluate all details about the caller application, and a second part 2 for interactions with the smart card. For example, the interactions may be one among a Login, a Logout, Read, Write, Encrypt, and Decrypt. **FIG 2B** correspondingly illustrates exemplary event generation components in accordance with an embodiment. For instance, system information **51,** consumer application information **52,** and smart card usage information **53** are reported for the load event 1. Similarly, these information groups are reported for the log-in (event 2), access object (event 3), and log out (event 4). They are also available to show to the local user to visualize use of his/her smart card, where the intention is to make the user aware of any misuse of their authenticator device 5 (e.g. smart card, token, etc.). As seen ahead, Part-1 and 2 are also sent to the server for visualization and analytics reporting to admin and security teams on the server side.

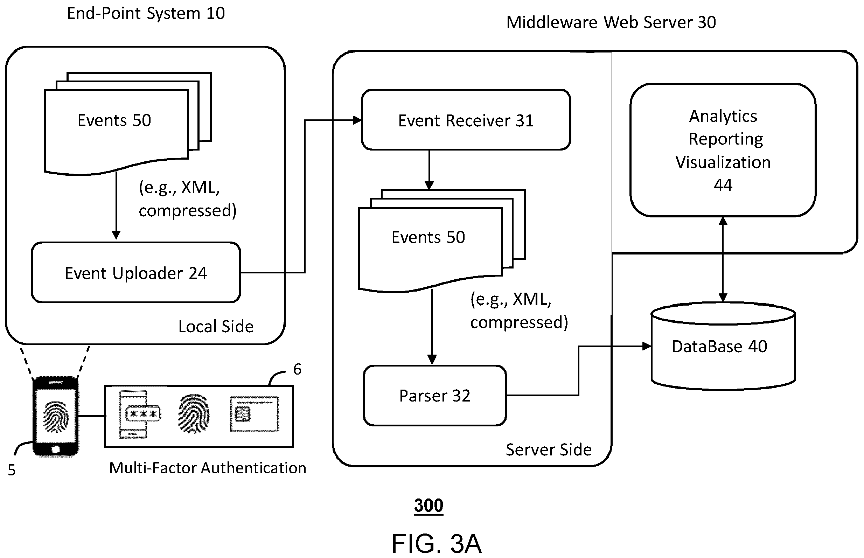

**FIG. 3A** illustrates a work-flow diagram for event **50** generation on the end-point 10 at a local side coupled with event reception and analysis on the server side in accordance with one embodiment. On the end-point **10,** the events **50** are formatted (e.g., XML) and compressed before the event uploader **24** shares them with the middleware web server 30. The event receiver **31** processes the events **50** as received and then parses them by way of the parser **32,** which are then stored in the database **40.**

In on embodiment, the Analytics Engine **48** identifies a list of Uniform Resource Locator (URLs) configured for client authentication that read the authenticator device **5** via a trusted or untrusted browser; and reports which URLS to block based on identified anomalies and patterns in user or attacker usage statistics on the authenticator device **5.** For example, it correlates events **50** for key logging when a user or attacker enters a Personal Identification Number (PIN), including login state for single sign on (SSO), number of wrong PIN attempts, and Denial of Service (DOS) for invalid PIN attacks to block PIN entry. It will also list the URLs engaging in client authentication and accessing the smart card, for example, public information.

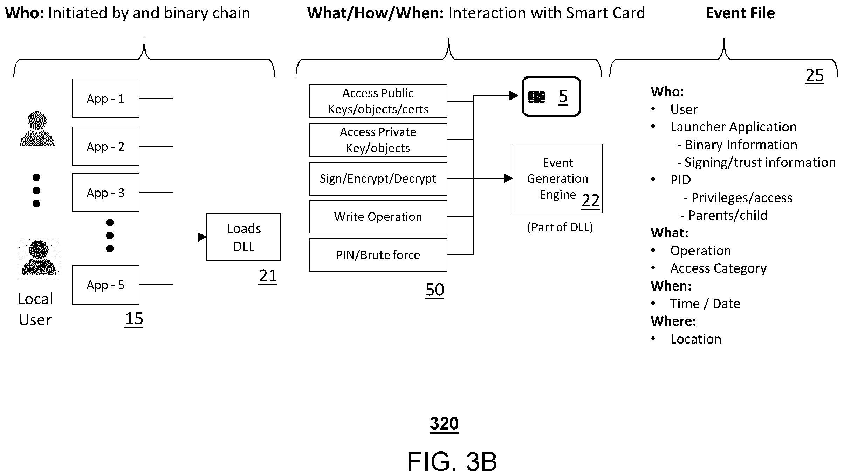

How this works in practice can be seen in **FIG. 3B****,** which illustrates an event generation example **320** related to PKI based Multi-Factor Authentication (MFA) on a smartcard (authenticator device **5).** In this scenario, there are multiple applications **15** executed by any number of users on various authenticator devices **5** coupled to various endpoint **10** devices. For example, one or more apps may be executing on the same endpoint **10** device (laptop, phone, smart card reader, etc.) using the same authenticator device **5** (smart card), and/or one or more apps on different endpoint **10** devices each with their own authenticator devices connected. Here, the system identifies the endpoint **10** along with who initiated the application(s) using the authenticator device(s) **5** (e.g. smart card), and the what/how/when interaction with the smart card, and which applications **15** loaded the DLL, for example. The interactions are available from the DLL that is loaded **21,** which was custom configured for this event reporting activity.

The event generation engine **22** (which may be part of the DLL, or an OS extension) reports how and what the smart card was used for (e.g. encryption, decryption, which certificates uses/accessed, private/public key pairs, read/write, signatures, access category, other operations, etc.), when the smart card was used (e.g. date, time, etc.) and where it was used (e.g., GPS location, etc.) among other information. The event file **25** contains the information necessary to know who launched the application, and other related information, such as, binary application info (such as the signature or app certificate), the process identifier (PID) assigned by the OS **13** and any related privileges or access, and child/parent processes.

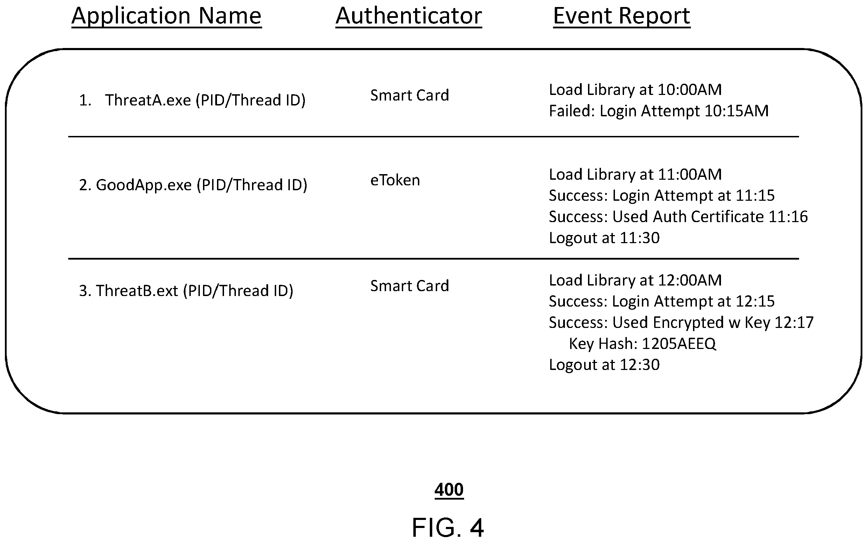

**FIG. 4** illustrates a generic example of an event report **400** for targeted threats and attacks on an end-point communicatively coupled to an authenticator device providing PKI based Multi-Factor Authentication (MFA) in accordance with one embodiment. The report 400 identifies, among other information, the application name with an indication level (e.g. good app, bad app, questionable app, non-registered app, unlicensed app, etc.) for each activity/use of the respective authenticator device (e.g. smartcard, eToken, USB dongle), and event information, such as when the DLL was loaded, whether it succeeded/failed at loading, who/when a user logged in/out and whether it succeeded/failed, what operations were performed with the authenticator device (e.g. key hash), and any other PKI based interaction/activity with the authenticator device.

The report **400** includes information on user behaviors, for example, where/when the user launches applications, extent of PIN activity (e.g. mode, median, average: X times a day), if there is frequent usage during holidays, whether the smart Card is continually or only occasionally plugged in, the number or activity related to infrequent PIN retries, whether multiple cards are used by the same app or different apps on same system, whether different cards are accessed on same system, whether the card is accessed via remote desktop (RDP usage), and keeping track of logins to remote machines using the smart card. It also includes reporting/analysis of application behaviors, for example, which applications are using the smart card, which objects are traversed (e.g. certs, keys, hashes, signatures, etc.) during smart card use, and other related activities such as login and logout, and encrypt/decrypt operations with the smart card.

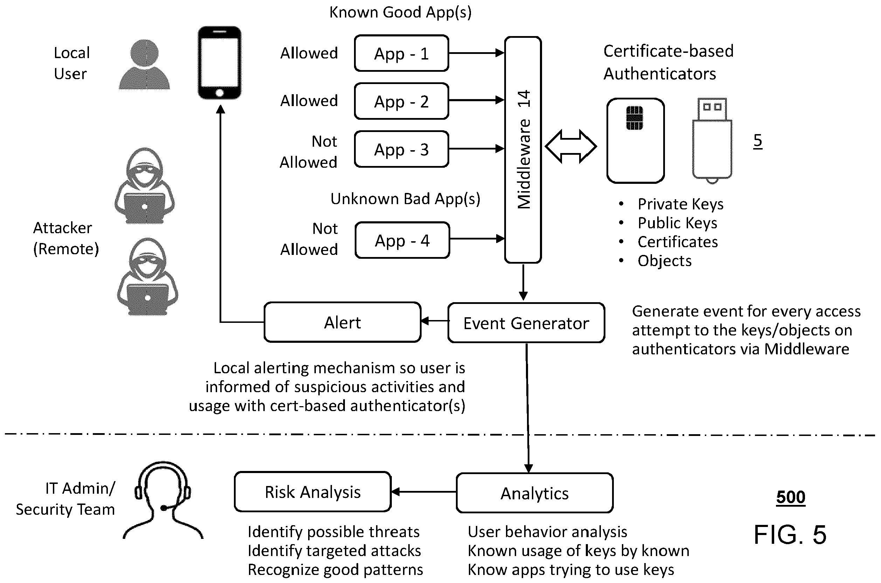

**FIG. 5** depicts an alert mechanism reporting environment **500** based on event threat analysis. Administrators need to know what applications are allowed or which all apps are not allowed. The environment **500** makes visible to system administrators all events related to user and attacker interactions with all applications and respective authenticator devices in accordance with one embodiment. Unknown application need to be identified and blocked by other means in corporate network. In this environment **500,** a list of applications interacting with smart cards (or other authentictor device) are consolidated. It provides for reporting of behavioral analysis of the user, for example, what are the daily/weekly usage pattern by a specific user. It identifies anomalies or anti patterns in the usage behavior, thereby allowing the admin to investigate the circumstances; information previously discussed with the exemplary report **400.**

Within the alert mechanism reporting environment **500,** by way of the aforementioned system **100** components, Information Technology (IT) admin/security team receives visibility on every action happening on every endpoint **10** that is using an authenticator device **5** leveraging the middleware **14.** In this way, for example, for any individual smart card, every activity happening at/on the endpoint **10** related to that smart card public/private keys/objects can be monitored on the server side, and the analytics and algorithms can help to detect unwanted usage of the smart card and behavior pattern of the users. The system identifies a list of URLs configured for client authentication, which can read card via trusted browser applications. In this way, admin can review those URLs, and can block its usage if required by other means. Also, the user is also informed of any suspicious activity by other apps using the smart card as an additional precaution, whereby the user can elect to remove the smart card in response.

By way of the middleware **14,** the environment **500** is able to generate PKI based events **50** with all the relevant information for all endpoints **10** using authenticator devices **5.** It collects all relevant information when producing the real-time report **400** and detects if there is any misuse of authorized smart cards happening inside the organization at the respective endpoints. All approval, denial, and other interaction activities and attempts with the authenticator device **5** are logged into the database. This includes binary/user details, the timestamp and the binary reputation to help the CISO team to detect end-point use scenario anomalies. It provides for full visibility of the threats targeting smart card based authentication and access management, while monitoring all access attempt of the private/public keys or smart card usage on local machine.

A first benefit is that the IT Admin or the Security team will be able to find anomalies on end points being authenticated or denied for any smart card based workflow. They can find the end-point where private keys are being accessed beyond the permitted scope. The system admin can see all the systems where an unknown application interacting with card, admin can take action to mitigate the threat at organization level. This allows them to know if there are targeted attacks happening to bypass or compromise MFA to gain access to the IP.

A second benefit is that it provides visibility to the local user about the live and logs of all smart card interactions. This helps the local user to know whenever their private key or any critical smart card operation is occurring. This permits the user to silently disconnect the token whenever they are informed that a suspect attacker is accessing/using the smart card. It is also applicable to hardware level innovations leveraging touch sense tokens, which waits for user to touch the token for any private key operation. Such interactions are also monitored, analyzed and visualized.

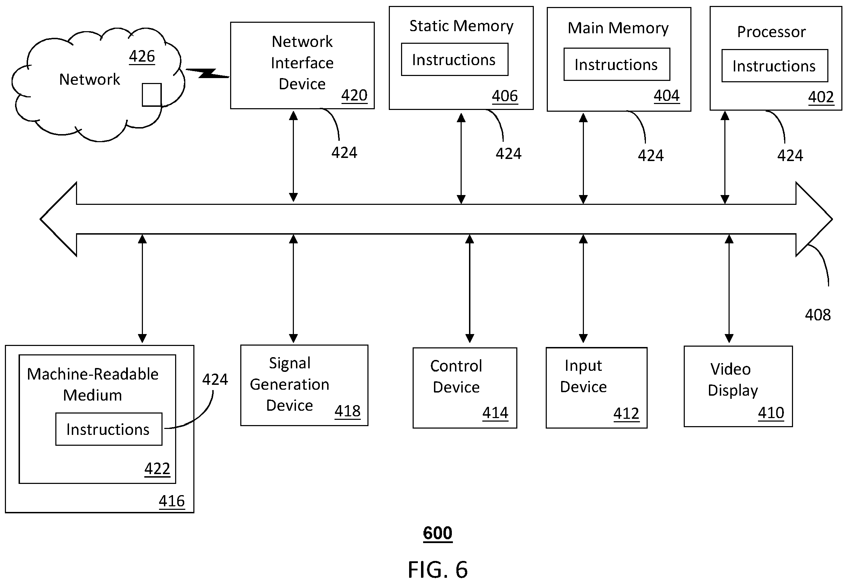

**FIG. 6** depicts an exemplary diagrammatic representation of a machine **600** and hardware platform suitable for use to perform the methods and steps exemplified above in system **100** and the components therein in accordance with various embodiments. For example method steps and operations of the Event Generator **22,** Event Viewer **33** and Event Uploader **24** on the local side, and/or the Event Receiver **31,** Event Parser **32** and Event Viewer **33** and Analytics Engine **48** may be performed by a hardware processor of the machine **600** executing computer program code instructions (from software) from an electronic memory to execute the method steps. At least one a hardware processor of machine **600** can execute computer program code instructions from an electronic memory to execute processes above.

The machine **600** is shown in the form of a computer system within which a set of instructions, when executed, may cause the machine to perform any one or more of the methodologies discussed above. In some embodiments, the machine operates as a standalone device, such as a computer, laptop, mobile device, remote control, or display. In some embodiments, the machine may be connected over the network to other machines. In a networked deployment, the machine may operate in the capacity of a server or a client user machine in server-client user network environment, or as a peer machine in a peer-to-peer, or distributed, network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system **600** may include a processor **602** (e.g., a central processing unit (CPU), a graphics processing unit (GPU, or both), a main memory **604** and a static memory **606,** which communicate with each other via a bus **608.** The computer system **600** may further include a video display unit **610** (e.g., a liquid crystal display or LCD), a flat panel, a solid state display, or a cathode ray tube (CRT)). The computer system **600** may include an input device **612** (e.g., a keyboard, touchless sensing unit 110), a cursor control device **614** (e.g., a mouse, keyboard), a disk drive unit **616,** a signal generation device **618** (e.g., a speaker or remote control) and a network interface device **620.**

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A system (100) to detect targeted Public Key Infrastructure (PKI) threats and attacks on an end-point (10) communicatively coupled to an authenticator device (5) providing PKI based Multi-Factor Authentication (MFA), the system comprising:
**on a local side:**
a Middleware (14) connecting one or more Applications (15) to the authenticator device (5) by way of an Operating system (OS)(13) there in between, said Middleware comprising:
an Event Generator (22) to generate events (50) related to access and usage of the authenticator device (5) by the one or more apps executing on the end-point;
an Event Viewer (23) that makes visible events related to certificate based PKI authenticator device interactions by the one or more apps; and
an Event Uploader (24) to upload the events;
on a server side, communicatively coupled to the local side:
an Event Receiver (31) to receive the events (50) presented by the Event Uploader;
an Event Parser (32) to parse and categorize the events, from the Event Receiver, specific to each of the one or more apps executing on the end-point;
an App Inventory Manager (44) coupled to the Event Parser to correlate the events with the one or more apps and keep records of the correlations in a Database (40);
an Analytics Engine (48), coupled to the Inventory Manager (44) and Database (40), that
identifies an application useage status of the authenticator device (5) in view of the correlations;
builds analytics on usage patterns from the application useage status on PKI authenticator device interactions by the one or more apps;
identifies anamolies and potential atttacks on the authenticator device in view of the analytics and produces an event threat analysis;
and,
an Event Viewer (33) that reports event threat analysis, and makes visible to system administrators events related to user and attacker interactions with the authenticator device.

2. The system of claim 1, wherein the authenticator device (5) is one of a Smart Card, an eToken, or USB key device based on PKI authentication.

3. The system of claim 2, wherein the end-point (10) is one of a mobile device, a smart card reader, a computer or other PKI certificate based authenticator host device.

4. The system of claim 1, wherein the Middleware (14) generates verbose events (50) on authenticator device (5) interactions using Public Key Cryptography Standards (PKCS) #11, Cryptographic Service Provider (CSP), Key Storage Provider (KSP) or Minidriver interfaces.

5. The system of claim 4, wherein the interactions correspond to Application Programming Interface (API) activities with the authenticator device (5), including function calls, method calls, and data inquiry using the API for PKCS#11, CSP, KSP or Minidriver.

6. The system of claim 5, wherein the interactions include one among a Login, a Logout, Read, Write, Encrypt, and Decrypt.

7. The system of claim 1, wherein the Analytics Engine (48) identifies potential attacks based on timing, location, user(s), type of access, and MFA interactions with the authenticator device (5).

8. The system of claim 1, further comprising a dynamic library (21) that is loaded by a calling application (15) of the one or more apps and configured to communicate with the authenticator device (5) for certificate based PKI authenticator device interactions, wherein the dynamic library (21) reports an origin of a binary of the calling application (15) loading the dynamic library (21), and signature information of the binary.

9. The system of claim 1, wherein the Middleware (14) is configured to retrieve information from an Operating System (OS) (13) regarding a calling application (15) of the one or more apps that loads a device driver (11) by way of the OS to communicate with the authenticator device (5) for certificate based PKI authenticator device interactions,
wherein the information identifies an origin of a binary of the calling application (15) invoking the device driver (11) by way of the OS, OS process tree information related to invokation of the binary and the the device driver (11), and signature information of the binary.

10. The system of claim 1, wherein the Middleware (14) further comprises an Operating System (OS) extension to a device driver (11) configured to retrieve information from a calling application (15) of the one or more apps that loads the device driver (11) to communicate with the authenticator device for certificate based PKI authenticator device interactions,
wherein the information identifies an origin of a binary of the calling application (15) invoking the device driver (11), OS process tree information related to invokation of the binary and the calling application, and signature information of the binary.

11. The system of claim 1, wherein the Analytics Engine (48)
identifies a list of Uniform Resource Locator (URLs) configured for client authentication that read the authenticator device (5) via a trusted or untrusted browser; and
reports which URLS to block based on identified anomalies and patterns in user or attacker usage statistics on the the authenticator device (5).

12. The system of claim 11, wherein the Analytics Engine (48) correlates events (50) for key logging when a user or attacker enters a Personal Identification Number (PIN), including login state for single sign on (SSO), number of wrong PIN attempts, and Denial of Service (DOS for invalid PIN attacks to block PIN entry.

13. The system of claim 12, wherein the Analytics Engine (48) correlates events and informs a user of one or more among:
- which application access, and or use, the authenticator device,
- successful and failed MFA attempts of the authenticator device by the one or more apps,
- when unknown workflow of authenticator device is triggered,
- when the authentictor device is in a Login State,
- authenticator device usage during SingleSignOn, and
- successful and failed PIN attempts.

14. A Middleware (14) on a local side connecting one or more Applications (15) to an authenticator device (5) by way of an Operating system (OS)(13) there in between, said Middleware comprising:
an Event Generator (22) to generate events (50) related to access and usage of the authenticator device (5) by one or more apps executing on an end-point;
an Event Viewer (23) that makes visible events related to certificate based PKI authenticator device interactions by the one or more apps; and
an Event Uploader (24) to upload the events,
wherein the Event Viewer (23) receives an event report (400) from an Analytics Engine (48) on a server-side that
correlates the events with the one or more apps and keep records of the correlations in a Database (40) by way of an an App Inventory Manager (44);
identifies an application useage status of the authenticator device (5) in view of the correlations;
builds analytics on usage patterns from the application useage status on PKI authenticator device interactions by the one or more apps;
identifies anamolies and potential atttacks on the authenticator device in view of the analytics and produces an event threat analysis;
and wherein the Event Viewer (23) presents information from the report (400) to a local user on the local side regarding application level activities associated with the authenticator device.
